# EUROPEAN PATENT SPECIFICATION

(11) **EP 2 911 016 B1**
(45) Date of publication and mention of the grant of the patent: **11.08.2021**
(21) Application number: 15151713.3
(22) Date of filing: 20.01.2015
(51) Int. Cl.: G04G 21/08, G06F 3/046, G06F 3/041

(54) **USER INPUT DEVICE**
BENUTZEREINGABEGERÄT
APPAREIL D'ENTRÉE UTILISATEUR

(30) Priority: 21.02.2014 US 201414186502
(43) Date of publication of application: 26.08.2015
(73) Proprietor: Polar Electro Oy, 90440 Kempele (FI)
(72) Inventor: Majava, Ville, 90440 Kempele (FI); Sorvala, Juha, 90440 Kempele (FI); Puolakanaho, Pertti, 90440 Kempele (FI)
(74) Representative: Kolster Oy Ab

(56) References cited:
- US-A1- 2006 016 896
- US-A1- 2007 050 618
- US-A1- 2010 206 157
- US-A1- 2011 115 741
- US-A1- 2011 115 742
- US-A1- 2012 092 284
- SAMPLE A P ET AL: "A capacitive touch interface for passive RFID tags", RFID, 2009 IEEE INTERNATIONAL CONFERENCE ON, IEEE, PISCATAWAY, NJ, USA, 27 April 2009 (2009-04-27), pages 103-109, XP031573198, ISBN: 978-1-4244-3337-7

## Description

### TECHNICAL FIELD

The present invention relates to wireless sensors and, particularly, to a radio frequency sensor configured to sense proximity of a user input entity.

### TECHNICAL BACKGROUND

A user interface of an electronic device typically comprises a user input device. Conventional user input devices comprise buttons, peripheral devices such as a mouse or a keyboard, and touch-sensitive sensors. The touch-sensitive sensors comprised in touch-sensitive display, for example, may be based on resistive or capacitive coupling. In both cases, the sensor is based on physical contact between a user input entity, e.g. a finger, and the sensor. US 2012/092284 discloses a portable computing device includes a three-dimensional (3D) touch screen and a core module. The 3D touch screen includes a two-dimensional (2D) touch screen section and a plurality of radio frequency (RF) radar modules. The core module is operable to determine whether the 3D touch screen is in a 3D mode or a 2D mode. When the 3D touch screen is in the 3D mode, the core module is further operable to receive one or more radar signals via one or more of the plurality of RF radar modules and interpret the one or more radar signals to produce a 3D input signal.

US 2011/0115742 discloses a touch sensitive pad with a plurality of touch sensitive elements and processing circuitry coupled to a communications interface and to the touch sensitive pad for scanning the plurality of touch sensitive elements to measure a plurality of touch sensitive element values. The plurality of touch sensitive element values is compared to a hovering finger threshold pattern. Upon a favorable comparison, a hovering finger condition is determined, and a position of the hovering finger in three-dimensions is detected with respect to the touch sensitive pad. The plurality of touch sensitive element values is compared to a touching finger threshold pattern. Upon a favorable comparison, a touching finger condition is determined, and a position of the touching finger is detected upon the touch sensitive pad.

### BRIEF DESCRIPTION

According to the invention, there is provided a user interface device as defined in appended independent claim 1. Preferred embodiments are defined in the dependent claims.

### BRIEF DESCRIPTION OF THE DRAWINGS

In the following the invention will be described in greater detail by means of preferred embodiments with reference to the accompanying drawings, in which
Figures 1A and 1B illustrate some examples of an apparatus to which embodiments of the invention may be applied;
Figures 2A to 2D illustrate touch-based sensing according to some embodiments of the invention;
Figure 3 illustrates a radio frequency radiator circuitry and a measurement circuitry according to an embodiment of the invention;
Figure 4 illustrates a process for mapping measurement values acquired from a radio frequency resonator to user input commands according to an embodiment of the invention;
Figure 5 illustrates an embodiment for mapping motion of a user input entity to user input commands;
Figure 6 illustrates some embodiments of the user input commands;
Figure 7 illustrates an embodiment of an impedance measurement circuitry;
Figure 8 illustrates three-dimensional measurements according to an embodiment of the invention;
Figure 9 illustrates a user interface command usable in connection with three-dimensional measurements according to an embodiment of the invention.
Figure 10 illustrates a measurement circuit according to another embodiment of the invention;
Figure 11 illustrates a process for detecting whether or not the apparatus is worn according to an embodiment of the invention; and
Figure 12 illustrates a process for triggering a pairing procedure according to an embodiment of the invention.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

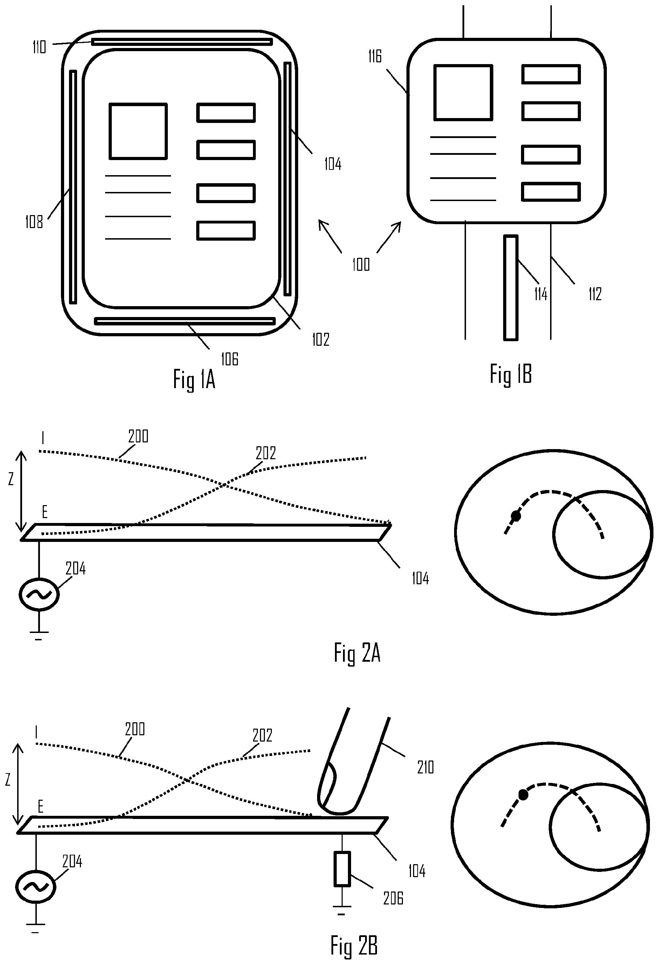

Figures 1A and 1B illustrate embodiments of an apparatus 100 to which embodiments of the invention may be applied. The apparatus 100 may be a portable electronic device comprising a user interface. Embodiments of the invention relate to a user input device comprised in the user interface. The user interface may further comprise a display unit 102 configured to visually output information to a user. The display unit 102 may be realized by using state-of-the-art techniques, e.g. liquid crystal display or light emitting diode (LED) display techniques. In the embodiment of Figure 1A, the apparatus is a hand-held device such as a mobile phone or a media player device. In the embodiment of Figure 1B, the apparatus is a wearable device comprising a casing housing the electronics of the device and a strap 112 or another fixing mechanism arranged to attach the device to the user, e.g. to the user's wrist. The wearable device may be a sensor device or a user interface device. The wearable device may be, for example, a heart rate transmitter, a wrist computer or a smart watch.

In an embodiment, the apparatus comprises a radio frequency (RF) radiator circuitry comprising a radio frequency resonator 104, 106, 108, 110, 114 and configured to generate an electromagnetic field extending from the RF resonator 104, 106, 108, 110, a measurement circuitry configured to measure an electric property of the radio frequency (RF) resonator 104, 106, 108, 110 when the radio frequency radiator circuitry is generating the electromagnetic field, and a processing circuitry configured to convert an output provided by the measurement circuitry into a user input command. Referring to Figure 1A, the RF resonator 104 to 110 may be comprised in a frame of the display unit 102. In an embodiment, the RF resonator 104 to 110 may be comprised on one or more edges of a casing of the apparatus.

Referring to Figure 1B, the RF resonator 114 may be comprised in the fixing mechanism 112 of the apparatus. In an embodiment, the RF resonator 114 is integrated into the fixing mechanism 112. The RF resonator may be formed into the fixing mechanism 112 by using a lamination technique or a laser direct structuring (LDS) method, for example. The material of the fixing mechanism 112 may be thermoplastic polyurethane (TPU), for example. In an embodiment, the RF resonator is comprised in the fixing mechanism 112 while a RF signal generator applying an RF signal to the RF resonator 114 to generate the electromagnetic field may be comprised in a casing 116 housing a processor and/or other electronics of the apparatus. One or more RF signal lines may be arranged inside the fixing mechanism 112 between the RF signal generator and the RF resonator 114. The casing 116 may further house other user interface components such as a display unit.

The electromagnetic field generated by the RF radiator circuitry may extend from the surface of the RF resonator 104 to 110, 114. The field may be generated around the RF resonator 104 to 110, 114 or partly around the RF resonator 104 to 110, 114. The field may be generated around the display unit 102 of the apparatus 100 or partly around the display unit 102. The electromagnetic field may be generated to a surface of the apparatus 100. The electromagnetic field may extend from the surface of the apparatus 100.

The RF resonator 104 to 110, 114 is an elongated structure. In an embodiment, the elongated structure comprises dielectric resonance cavity which acts as the RF resonator 104 to 110, 114.

The RF radiator circuitry, the measurement circuitry, and the processing circuitry are comprised in a user input device of the apparatus. Let us now describe the operation of the user input device with reference to Figures 2A to 2D. Figure 2A illustrates the RF radiator circuitry comprising the RF resonator 104 and a signal generator 204 configured to output an RF signal to the RF resonator 104. A frequency of the RF signal may be matched with the length of the RF resonator 104. In the embodiment of Figure 2A, the frequency of the RF signal is selected such that the length of the RF resonator 104 is one fourth of the wavelength of the RF signal, as illustrated by a voltage component 202 and a current component 200 generated by the RF resonator in response to the RF signal output from the signal generator 204. On the right hand side, an illustration of a Smith chart is shown where the dot on the dashed line represents impedance of the RF resonator in the situation illustrated on the left hand side of the corresponding Figure.

In an embodiment, the RF resonator 104 to 110 is comprised in a frame of the display unit 102.

As the RF resonator 104 to 110, 114 may be realized by a strip, e.g. a microstrip, or it may be formed in a laser direct structuring (LDS) process, the RF resonator may be designed to have an arbitrary size and form, thus enabling space and weight efficient implementations, when compared with resistive or capacitive touch-sensitive panels. A further advantage is a continuous detection of the location of the user input entity, as described below.

In an embodiment, the apparatus further comprises a wireless communication circuitry configured to support a wireless communication protocol, and the RF resonator 104 to 110, 114 is comprised in the wireless communication circuitry. The wireless communication protocol may comprise at least one of the following: Bluetooth, Bluetooth Smart, IEEE 802.11-based protocol (WiFi), IEEE 802.15-based protocol, Ant or Ant+. Accordingly, the RF resonator 104 to 110, 114 may have a dual functionality by operating as an antenna for the wireless communications with another apparatus and as the user input device configured to sense the proximity and location of the user input entity 210. In an embodiment, the RF signal generator outputting the RF signal to the RF resonator 104 to 110, 114 may be the wireless communication circuitry, e.g. a Bluetooth or WiFi chip. In an embodiment, the wireless communication circuitry may output the RF signal to the RF resonator 104 to 110, 114 simultaneously when carrying out frame transmissions by using the wireless communication protocol.

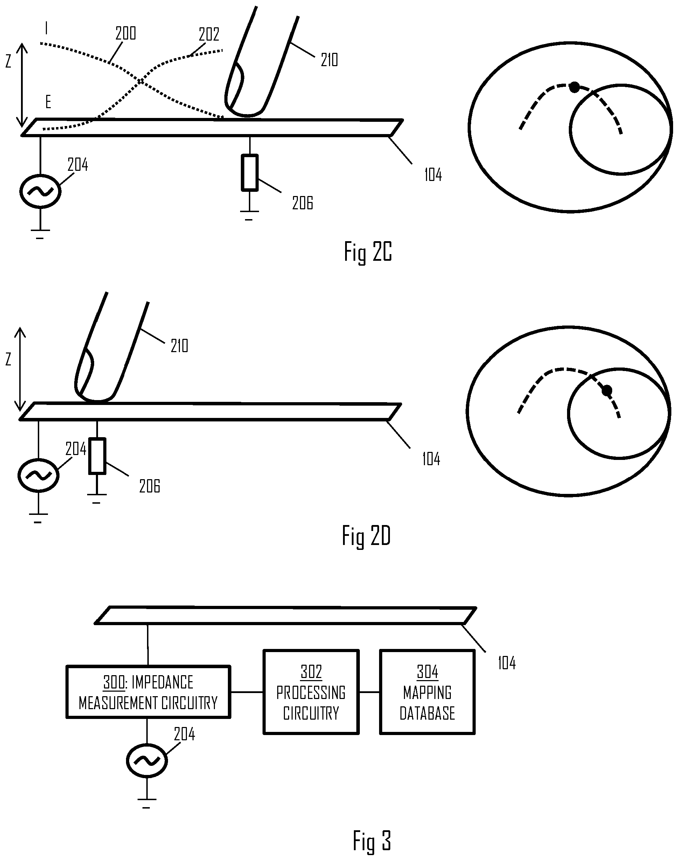

As illustrated in Figures 2A to 2D, a user input entity 210 such as a finger or another object brought close to the RF resonator 104 changes the impedance of the RF resonator along a circle in the Smith chart. The change of the impedance may follow a standing wave ratio (SWR) circle of the Smith chart represented by the dashed semi-circle in the Figures 2A to 2D. The reason for the impedance change is that the user input entity 210 affects the fields 200, 202 differently in different positions with respect to the RF resonator. In an embodiment, a user input entity 210 brought into a near field of an antenna formed by the RF radiator circuitry affects the impedance changes. The impedance change created by the user input entity 210 is represented in the Figures 2A to 2D by a parasitic impedance component 206 having a value which changes depending on the position of the user input entity 210. Accordingly, the impedance of the RF resonator 104 is different when the user input entity 210 is at one end of the RF resonator 104 (Figure 2B) compared with the situation where the user input entity 210 is at the other end of the RF resonator 104 (Figure 2D). As a consequence, the dot representing the current impedance in the Smith charts is at different ends of the semi-circle in Figures 2A to 2D. For example, the impedance measured in the situation of Figure 2A may be 20 ohms, the impedance measured in the situation of Figure 2B may be 40 ohms, the impedance measured in the situation of Figure 2C may be 50 ohms, and the impedance measured in the situation of Figure 2D may be 150 ohms. Accordingly, the measured impedance may increase linearly or non-linearly as the user input entity 210 is moved from one end of the RF resonator 104 to the other end of the RF resonator 104, thereby enabling the detection of the location of the user input entity 210 with the impedance measurements and appropriate mapping between the impedance values and the locations.

In the embodiments where the length of the RF resonator 104 to 110, 114 is one fourth of the wavelength of the RF signal, the impedances caused by the user input entity 210 in different locations along the RF resonator 104 to 110, 114 may form the half circle illustrated in the Figures 2A to 2D. In embodiments where the length of the RF resonator 104 to 110, 114 is half of the wavelength of the RF signal, the impedances caused by the user input entity 210 in different locations along the RF resonator 104 to 110, 114 may form a full circle, thus enabling the detection as with sufficient accuracy. Accordingly, the length of the RF resonator 104 to 110, 114 may be less than or equal to the wavelength of the RF signal applied to the RF resonator 104 to 110, 114.

In an embodiment, the impedance of the RF resonator 104 to 110, 114 is measured while the electromagnetic field is being generated, and measurement values of the impedance are mapped to the locations of the user input entity 210 with respect to the RF resonator 104 to 110, 114. The above-mentioned impedance measurement circuitry may be configured to carry out the impedance measurements. Figure 3 illustrates a circuit diagram of a measurement arrangement according to an embodiment of the invention. Referring to Figure 3, the signal generator 204 is connected to the RF resonator 104 and configured to generate the electromagnetic field. The impedance measurement circuitry 300 is also connected to the RF resonator in order to measure the impedance or another metric proportional to the impedance, thus effectively enabling observation of the changes in the impedance characteristics of the RF resonator. The impedance measurement circuitry 300 is connected to the processing circuitry 302 and configured to output a measurement value to the processing circuitry, wherein the measurement value represents the measured impedance. The processing circuitry 302 is configured to map one or more received measurement values to the user input command and control at least one function of the apparatus to execute a response to the user input command.

In some embodiments of the invention, it is not necessary for the user input entity 210 to be in physical contact with the RF resonator 104, because the impedance change is affected when the user input entity 210 changes the RF fields generated by the RF radiator circuitry, e.g. is in the near field of the electromagnetic field. The near field may be defined as a volume within a wavelength of the RF signal from the RF resonator 104, e.g. for a 1000 MHz signal it is 30 centimetres. The impedance change caused by the user input entity 210 typically changes in a logarithmic manner as a function of the distance between the RF resonator 104 and the user input entity such that the impedance change caused by the motion of the user input entity 210 is smaller when the user input entity 210 is far away from the RF resonator 104 and greater when the user input entity 210 is close to the RF resonator 104. Accordingly, more accurate positioning of the user input entity 210 may be achieved when the user input entity 210 is close to the RF resonator 104. However, the detection of the proximity of the user input entity 210 from such a distance, e.g. the wavelength, enables three-dimensional positioning of the user input entity which is beyond the capability of conventional touch-sensitive input devices.

In the embodiment of Figure 1A, the apparatus comprises a plurality of RF resonators 104 to 110. In such embodiments, a separate signal generator and an impedance measurement circuitry may be provided for each RF resonator 104 to 110. The signal generators may be configured to output an RF signal matched with the dimensions of the respective RF resonators, e.g. the wavelength of the RF signal may be matched with the length of the RF resonator. The impedance measurement circuitries may be connected to the processing circuitry 302 configured to compute the user input command on the basis of the measured impedance values received from the impedance measurement circuitries. Using the measurements provided by multiple impedance measurement circuitries improves the accuracy of estimating the location of the user input entity 210 and the selection of the correct user input command.

In another embodiment using the multiple RF resonators 104 to 110, a common signal generator may supply the RF signal to a plurality of RF resonators 104 to 110. When the signal generator is connected to the plurality of RF resonators 104 to 110 having the same dimensions, e.g. the same length, the same RF signal may be output to the RF resonators 104 to 110. When the signal generator is connected to the plurality of RF resonators 104 to 110 having different dimensions, e.g. different lengths, the signal generator may be configured to output two different RF signals with different wavelengths, wherein each RF signal is matched with the dimensions of the RF resonator 104 to 110 to which it is applied. The signal generator may alternately output the RF signals to the different RF resonators by alternately switching the connections to the RF resonators 104 to 110 and by changing the frequency of the output RF signal in synchronization with the switching.

In an embodiment, at least some of the RF resonators 104 to 110 are arranged on the same plane, e.g. the plane formed by the display unit 102 in Figure 1A. Some RF resonators may extend in the same direction and, thus, be arranged in parallel such as RF resonators 106 and 110 in Figure 1A. Some RF resonators may extend in the perpendicular direction in the plane, e.g. RF resonators 106, 108 in Figure 1A. It should be appreciated that some of the RF resonators 104 to 110 may be omitted. A reasonable positioning accuracy may be achieved by using only the resonators 104 and 106 perpendicular to each other, resonators 104 and 108 in parallel with each other, or even a single resonator 114.

As mentioned above, an advantage of the RF resonator 104 to 110, 114 is that it is capable of providing a continuous electric response to the proximity and movement of the object with respect to the RF resonator 104 to 110, 114. In an embodiment, the electric property that changes continuously is the impedance. In another embodiment, the electric property is a resonance frequency of the RF resonator 104 to 110, 114. The continuous detection may be defined such that the electric property is not quantized. The first quantization of the electric property may occur in an analog-to-digital (A/D) conversion, e.g. in the measurement circuitry 300 or the processing circuitry 302. Accordingly, the desired quantization factor may be selected arbitrarily by selecting an appropriate A/D converter. The quantization is thus not limited by physical dimensions of the sensing element, i.e. the RF resonator 104 to 110, 114.

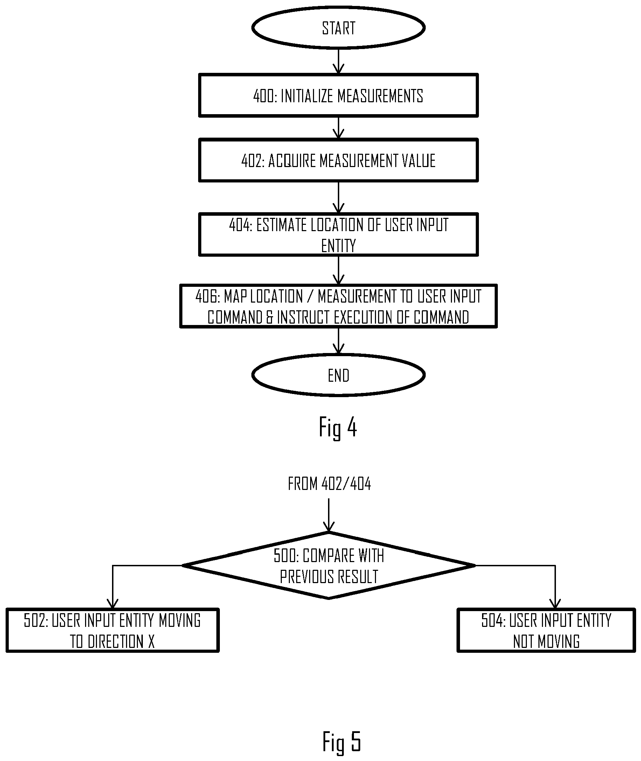

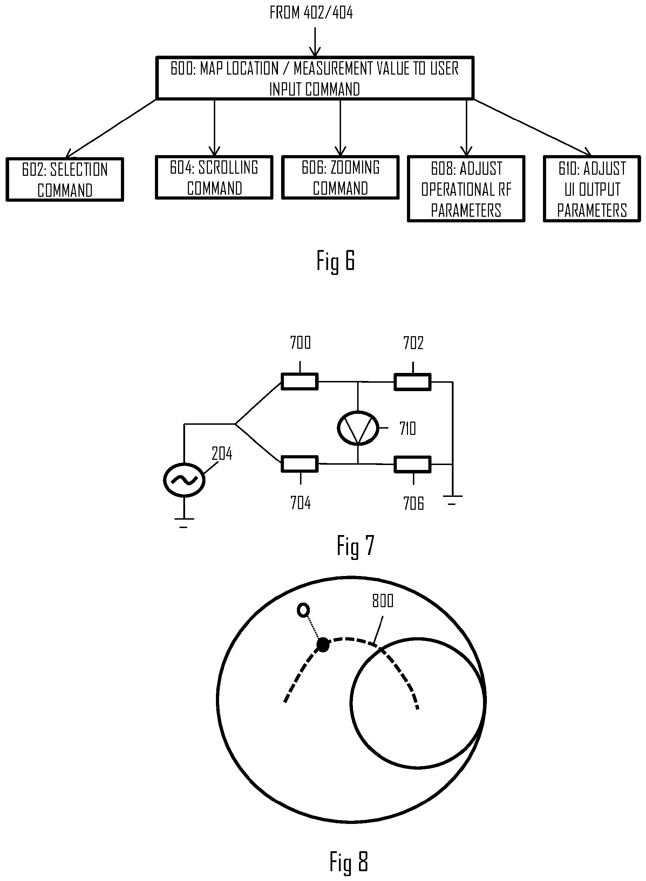

Let us now describe the operation of the processing circuitry 302 with reference to a flow diagram of Figure 4. Figure 4 illustrates a process that may be executed in the processing circuitry 302. Referring to Figure 4, the processing circuitry may initialize the measurements of the RF resonator 104 to 110, 114 in block 400. Block 400 may comprise activating the signal generator(s) 204 to output the RF signal to the RF resonator(s) 104 to 110, 114. In some embodiments, block 400 may comprise configuring the measurement circuitry or circuitries to start measuring the RF resonator(s). In block 402, the processing circuitry 302 receives a measurement value from the measurement circuitry, e.g. the impedance measurement circuitry 300. The measurement value may comprise any value proportional to the impedance, e.g. a voltage, a current value, an amplitude value, a phase value, or any combination of these values. In other embodiments, another measurement value may be used, e.g. resonance frequency of the RF resonator 104 to 110, 114 as described below. In block 404, the processing circuitry 302 may access a database mapping measurement values with location indices, thus enabling the processing circuitry to determine the location of the user input entity 210 on the basis of the received measurement value. In block 406, the processing circuitry maps the location of the user input entity or observed trajectory of the user input entity represented by a plurality of consecutively received measurement values to a user input command on the basis of a mapping table. The mapping table may map the location or a combination of locations to a given user input command or, in some embodiments, the measurement value or a combination of measurement values to the user input command, thus enabling the processing circuitry to determine the user input command on the basis of observed movement or location of the user input entity 210. Upon determining the appropriate user input command, the processing circuitry instructs execution of a function triggered by the user input command. Figure 6 illustrates some embodiments of the functions. Thereafter, the process may end or the process may return to block 402.

In some embodiments, the determination of the user input command is based on measurements of a plurality of consecutive measurement values representing the motion of the user input entity 210. A typical user input command based on monitoring the movement of the user input entity 210 with respect to the user input device is a sliding, swiping, or scrolling input known in the context of touch-sensitive displays. In the context of the present invention, the sliding motion of the user input entity 210 may be observed on the basis of the impedance values measured from one or more of the RF resonators 104 to 110, 114.

Figure 5 illustrates an embodiment for monitoring the movement of the user input entity. Referring to Figure 5, the process of Figure 4 may proceed to block 500 from block 402 or 404, depending on the embodiment. In block 500, the processing circuitry 302 compares the currently determined measurement value(s) of the RF resonator(s) 104 to 110, 114 with the previously determined measurement values of the RF resonator(s) 104 to 110, 114. If a change is observed in the comparison, it may be determined that the user input entity is moving (block 502). As a consequence, the processing circuitry may determine the trajectory of the movement on the basis of the consecutive measurements and select a user input command that matches with the trajectory, e.g. a user input command to scroll the display to the direction matched with observed the trajectory. Zooming command may be realized in a similar manner. On the other hand, if no change is observed in block 500, it may be determined that the user input entity 210 is not moving (block 504), and the processing circuitry 302 may select a user input command matching with the static position of the user input entity 210, e.g. selection of an icon displayed on the display unit.

Figure 6 illustrates an embodiment of different user input commands that may be triggered by the measurements performed on the RF resonator 104 to 110, 114. Referring to Figure 6, the processing circuitry maps the location of the user input entity determined in block 404 or the measurement results determined in block 402 to the user input command. Upon determining on the basis of the mapping that the command is a selection command of a determined selection component, e.g. an icon, an application, or a menu item displayed on the display unit, the process may proceed to block 602 in which the selection command is executed. The selection command may be selection of an application or a menu item displayed on the display unit or selection of an operational mode of the apparatus. For example, when the apparatus is a sensor device, the selection command may change or trigger a measurement mode of the sensor device. Upon determining on the basis of the mapping that the command is a scrolling command to scroll the display currently displayed on the display unit, the process may proceed to block 604 in which the scrolling command is executed and the display is scrolled in response to the motion of the user input entity. Upon determining on the basis of the mapping that the command is a zooming command, the process may proceed to block 606 in which the zooming command is executed and the display is zoomed in or out in response to the motion of the user input entity. Upon determining on the basis of the mapping that the command is an adjustment of user interface output parameters, the process may proceed to block 610 in which the corresponding user interface output parameters are changed. Block 610 may comprise adjusting volume of audio signals output from the apparatus or changing a music or video track played in the apparatus.

In an embodiment of block 604, the scrolling command may be executed upon detecting a translational movement of the user input entity 210. In another embodiment, the scrolling command may be executed upon detecting a rotational movement of the user input entity 210. The rotational movement may be detected, for example by using a plurality of RF resonators 104 to 110. For example, when using the RF resonators 104, 108, the rotational movement may be detected by detecting, simultaneously, translational movement to one direction with RF resonator 104 and translational movement to the opposite direction with RF resonator 108. The detection of the rotational movement of the user input entity may trigger a specific function.

In an embodiment of block 604, a menu browsing command or scrolling may be detected by first detecting that the user input entity is brought into the proximity of the RF resonator 104 to 110, 114 and then moved along the plane of the RF resonator 104 to 110, 114, e.g. the plane of the display unit. A menu item may be highlighted according to the observed movement of the user input entity, thus affecting the browsing function. A selection of a menu item may be triggered by the detection that the user input entity is moved away from the plane and the RF resonator 104 to 110, 114.

In some embodiments, block 600 may comprise mapping the measurement results to commands other than the user input commands. In an embodiment, the processing circuitry 302 is configured to change operational parameters of the apparatus upon detecting a determined measurement result in the RF resonator. For example, the impedance measured in a situation of Figure 2A, e.g. in the free space where the user input entity is not detected in the proximity of the RF resonator 104, may be different when the apparatus is in the water and when the apparatus is surrounded by air. Upon detecting a change of the measurement value from a measurement value mapped to the air environment to a measurement value mapped to the underwater environment, the processing circuitry may configure the signal generator 204 and/or the measurement circuitry 300 to recalibrate the frequency of the RF signal and/or the measurements to underwater configurations. Upon detecting a change of the measurement value from a value mapped to the underwater environment to a value mapped to the air environment, the processing circuitry may configure the signal generator 204 and/or the measurement circuitry 300 to recalibrate the frequency of the RF signal and/or the measurements to air configurations. This procedure may be carried out in block 608. As a consequence, the location of the user input entity may be determined reliably in different environments. Another example of changing the operational parameters may relate to an apparatus comprising the RF radiator circuitry, the impedance measurement circuitry, the processing circuitry, and a conventional touch-sensitive display based on capacitive or resistive coupling. In such an embodiment, upon detecting a change in the environment on the basis of the impedance measurements applied to the RF resonator 104 to 110, 114, the processing circuitry 302 may reconfigure at least some parameters of the conventional touch-sensitive display.

Figure 7 illustrates an embodiment of the impedance measurement circuitry 300. In Figure 7, a Wheatstone bridge is used to measure the impedance of the RF resonator 104. A resistor 702 represents the impedance of the RF resonator 104, while the other resistors 700, 704, 706 may form references. The values of the other resistors 700, 704, 706 may be known and fixed, e.g. 50 ohms. A voltage 710 measured between a signal line connecting resistors 700, 702 and a signal line connecting resistors 704, 706 is proportional to the impedance 702 of the RF resonator 104, and the voltage may be used as the impedance value. Alternatively, the voltage measurement 710 may be replaced by current measurement. The voltage/current values may then be mapped to the locations of the user input entity 210 or to the user input commands.

In other embodiments, another measurement circuit diagram may be used. In some embodiments, only the amplitude of the impedance of the RF resonator(s) 104 to 110, 114 is measured and mapped into the user input commands. In other embodiments, the amplitude measurement is backed by phase measurement of the impedance of the RF resonator(s) 104 to 110, 114, and a combination of the amplitude value and the phase value is mapped to the user input commands. In this manner, accuracy may be improved.

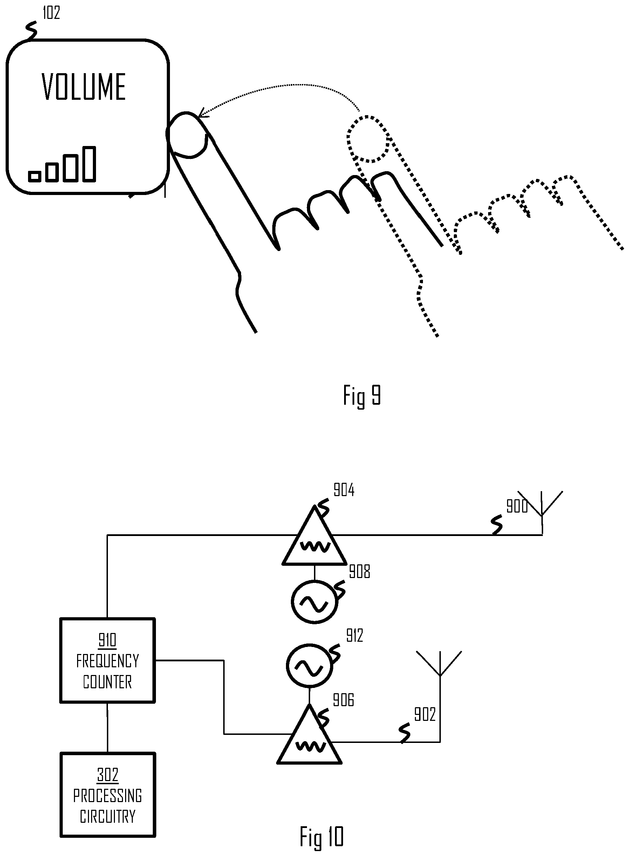

In yet other embodiment, a resonating frequency of the RF resonator(s) 104 to 110, 114 is measured, and the resonating frequency is mapped to the user input commands. The resonating frequency of the RF resonator(s) 104 to 110, 114 has been observed to change according to the location of the user input entity with respect to the RF resonator(s) 104 to 110, 114. Accordingly, different values of the resonating frequency may be mapped to different locations of the user input entity 210 with respect to the RF resonator(s) 104 to 110, 114, which enables detection of the user input commands. For example, a circuit diagram described below in connection with Figure 10 may be used.

Let us now describe the three-dimensional detection with reference to Figure 8. As described above, the movement of the user input entity 210 with respect to the RF resonator 104 maps to movement of the dot in the circle 800 on the Smith diagram or, in general, to a change of an impedance value in a set of impedance values of the RF resonator 104 when the distance between the user input entity and the RF resonator is constant. When the user input entity is moved away from the RF resonator, the impedance value departs from the circle 800, as shown by the small circle connected to the dot by a dotted line in Figure 8. As a consequence, the difference between the measured impedance and its projection to the circle 800 may be proportional to the distance between the user input entity 210 and the RF resonator 104. This dependence may be utilized in determining the distance between the user input entity 210 and the RF resonator, thus enabling the zooming user input commands or other user input commands determined on the basis of the distance or linear or non-linear change in the distance. With respect to the zooming function, the measured impedance may change logarithmically when the distance of the user input entity changes linearly. In an embodiment, a linearization function may be applied to the impedance measurements in order to map the logarithmic change of the impedance to a linear scale and, thus realize a zooming function or another function that provides a linear response to the linear movement of the user input entity 210. In the embodiment of Figure 9, a volume control function is illustrated where the volume may be increased/decreased when the user input entity (a finger or a palm) is brought close to the apparatus (the RF resonator) and decreased/increased when the user input entity is moved away from the apparatus.

In the embodiment of Figure 10, the RF radiator circuitry comprises at least two orthogonally disposed antennas 900, 902 (or RF resonators 104 to 110, 114). The antennas 900, 902 may be disposed orthogonally with respect to each other such that they induce and sense orthogonal components of an electromagnetic field around them. The antennas 900, 902 may each radiate and sense electromagnetic radiation along one axis, and the third dimension of the electromagnetic field may be estimated by processing the radiation sensed by the two antennas 900, 902, as described above in connection with Figure 7, for example. In particular, the antennas 900, 902 may be configured to sense proximity and degree of proximity in a direction that is orthogonal to a plane formed by mechanics of the training computer, e.g. a plane formed by a circuit board of the training computer.

In an embodiment, the antennas are micro-strip antennas integrated into a circuit board.

In an embodiment, the impedance measurement circuitry 300 is configured to convert a detected change in the sensed electromagnetic field into a measurement or control signal output to the processing circuitry 302. In the embodiment of Figure 10, the impedance measurement circuitry 300 comprises a first oscillator 908 connected to an input of a first resonance circuitry 904 configured to provide a resonance frequency as a function of an RF signal provided by the first oscillator 908 and a control signal received from the antenna 900. Similarly, a second oscillator 912 may be connected to an input of a resonance circuitry 906 configured to provide a resonance frequency as a function of an RF signal provided by the second oscillator 912 and a control signal received from the antenna 902. Referring to Figures 9 and 10, when the user moves his hand or finger within the proximity of the apparatus, the electromagnetic field sensed by the antennas 900, 902 changes, the impedance of the antennas 900, 902 changes as well, and the antennas apply a changed signal to the resonance circuitries 904, 906. As a response, the resonance frequency of the resonance circuitries 904, 906 changes and they output a changed resonance signal to a frequency counter module 910. The frequency counter 910 may be configured to map the detected resonance frequencies of the resonance circuitries 904, 906 to a determined control signal and output the control signal to the processing circuitry 302. The processing circuitry 302 may then map the control signal to the user input commands, as described above. When determining the user input commands, a mapping database storing mappings between the resonance frequencies or resonance frequency combinations and corresponding user input commands may be utilized. The resonance frequencies or resonance frequency combinations stored in the database may represent static position of the user input entity with respect to the antenna(s) 900, 902 or motion of the user input entity with respect to the antenna(s) 900, 902. Accordingly, a single resonance frequency, a single resonance frequency per antenna, or a sequence of resonance frequencies per antenna may be mapped to each user input command.

In an embodiment, the frequency counter 910 is an analog-to-digital converter.

In an embodiment, a single oscillator may output the RF signals to both resonance circuitries 904, 906.

In an embodiment, the oscillator is realized by a transistor circuitry or an operational amplifier (op-amp) circuitry.

With the embodiment of Figures 9 and 10, it is possible to provide a wireless switch or a wireless button, wherein the user may operate the switch by bringing his/her hand close to the apparatus or by moving the hand with respect to the apparatus. The detection of the electromagnetic field corresponding to the scenario where the user's hand is within the proximity of the antennas 900, 902 may activate a determined function in the apparatus. The function may be a selection function. The detection of an electromagnetic field corresponding to the scenario where the user's hand is moved linearly within the proximity of the antennas 900, 902 may activate a determined adjustment function, e.g. a sliding adjustment of a volume or zoom function. The linear movement of the hand may be directed towards or away from the apparatus to realize a different sliding function. Different motions of the hand within the proximity of the antennas may trigger different functions in the apparatus according to the changes in the electromagnetic field sensed by the antennas and the impedance measurement circuitry. In the embodiment of Figure 10, the signal generator 204 may even be omitted.

The impedance measurement circuitry described in connection with Figure 10 may be employed in the embodiments described above in connection with Figures 3 to 8.

In an embodiment, the processing circuitry 302 may activate the impedance measurement circuitry 300 upon receiving an activation signal through a user interface of the training computer, e.g. user operation of a physical button or selection of a determined operating mode. As a response to the activation, the impedance measurement circuitry 300 may start the sensing of the gestures from the impedance of the antennas 900, 902. The impedance measurement circuitry may be deactivated upon receiving a deactivation signal through the user interface and/or upon detecting from the antenna impedance(s) that the hand is no longer within the proximity of the antennas.

In another embodiment, the impedance measurement circuitry may operate autonomously and start the sensing of the gestures upon detecting the proximity of the hand with respect to the antennas.

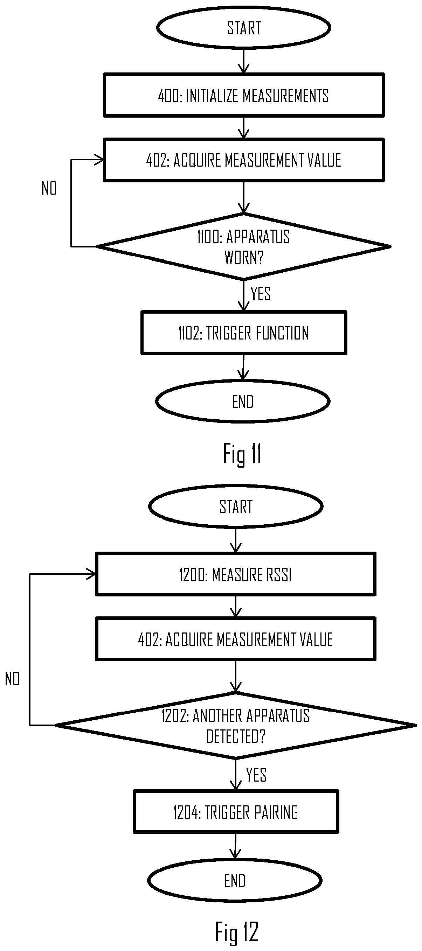

In an embodiment where the apparatus is the wearable device, the processing circuitry may be configured to determine, on the basis of the impedance measurements, whether or not the apparatus is currently worn. A body or a limb of the user may affect the electromagnetic field and the impedance of the RF resonators such that the attachment of the apparatus to the user may be detected with the impedance measurements. Figure 11 illustrates an embodiment of such a process executed in the processing circuitry 302. Referring to Figure 11, the processing circuitry 302 may initialize the measurements in block 400 and acquire a measurement value in block 402. In block 1100, it is determined whether or not the measurement value indicates that the apparatus is currently worn. The determination may be based on a similar mapping described above, e.g. one range of the measurement values may be mapped to a situation where the apparatus is worn and another range of the measurement values may be mapped to a situation where the apparatus is not worn. If the apparatus is detected to be worn, the process may proceed to block 1102 where a function is triggered. The function may be, for example, display of a welcome screen on the display unit or a change in an operational mode of the apparatus. If the apparatus is detected not to be worn, the process may return to block 402 or another function may be triggered. The other function may be display of a "good bye" screen on the display unit when the processing circuitry determines that the user has taken the apparatus off.

In an embodiment, the wireless button principle described above may be used to trigger pairing with another apparatus, e.g. a sensor device or an exercise device such as a gym device. The apparatus may employ the measurements carried out by the measurement circuitry in combination with radio measurements performed on RF signals received from the other apparatus when triggering the pairing process. Figure 12 illustrates an embodiment of such a process. Referring to Figure 12, a radio communication circuitry of the apparatus is configured to measure a received signal strength indicator or another property of a radio signal received from the other apparatus through a wireless communication circuitry comprised in the apparatus. In block 402, the processing circuitry acquires a measurement value from the measurement circuitry measuring the RF resonator. In block 1202, it is determined whether or not the other apparatus has been detected on the basis of the measurements carried out in blocks 1200 and 402. If the other apparatus is determined to have been detected, the process may proceed to block 1204 where the pairing with the discovered apparatus is triggered. Otherwise, the process may return to block 1200.

In an embodiment of Figure 12, the user may use the wireless button functionality and satisfy the condition of block 402 to the pairing process by bringing the user input entity close to the RF resonator. Then, if the measurements carried out in block 1200 also indicate that the other apparatus has been detected, the pairing may be triggered. In case multiple apparatuses are detected in block 1200, the one providing the highest received signal strength and thus determined to be the closest is selected for the pairing. In another embodiment of Figure 12, the user may bring the other apparatus to the proximity of the apparatus and, thus satisfy both blocks 1200 and 402 and trigger the pairing.

Let us now describe some embodiments how the RF resonator(s) may be realized when manufacturing the apparatus. The RF resonator may be formed in a laser direct structuring process. The RF resonator may be formed by a metal plate or a metal strip. The RF resonator may be formed by an insertion-molded wire or plate. The RF resonator may be formed by an indium tin oxide sheet on a lens. The RF resonator may be integrated into a wrist strap of the wearable apparatus.

In an embodiment, the processing circuitry 302 comprises at least one processor and at least one memory including a computer program code, wherein the at least one memory and the computer program code are configured, with the at least one processor, to cause the processing circuitry to execute any one of the above-described embodiments.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 4 to 8 may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile telecommunication systems defined above but also to other suitable telecommunication systems. The protocols used, the specifications of mobile telecommunication systems, their network elements and subscriber terminals, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A user input device comprising:
a radio frequency radiator circuitry comprising an elongated radio frequency resonator (104, 106, 108, 110) configured to generate an electromagnetic field extending from the radio frequency resonator;
a measurement circuitry (300) configured to measure an electric property of the radio frequency resonator that changes in response to a change in a proximate location of an object along the elongated radio frequency resonator when the radio frequency resonator is generating the electromagnetic field; and
a database (304) mapping a plurality of measurement values of the electric property of the radio frequency resonator to respective location indices along the elongated radio frequency resonator; and
a processing circuitry (302) configured to determine, on the basis of the measured electric property and the database, a location of the object along the elongated radio frequency resonator and to convert the measured electric property into a user input command.

2. The user input device of claim 1, wherein the measured electric property comprises at least one of impedance of the radio frequency resonator and a resonating frequency of the radio frequency resonator.

3. The user input device of claim 1 or 2, wherein the apparatus further comprises a display unit, and wherein the radio frequency resonator extends along a surface of the display unit.

4. The user input device of claim 3, wherein the radio frequency resonator is a first radio frequency resonator and extends along a first direction of the surface of the display unit, and wherein the apparatus further comprises a second radio frequency resonator.

5. The user input device of claim 4, wherein the second radio frequency resonator extends in the first direction or in a direction perpendicular to the first direction.

6. The user input device of any preceding claim, wherein a length of the radio frequency resonator is less than a half of a wavelength of a radio frequency signal input to the radio frequency resonator when generating the electromagnetic field.

7. The user input device of any preceding claim, wherein the measurement circuitry is configured to measure impedance of the radio frequency resonator and wherein the processing circuitry is configured to convert a combination of an amplitude value and a phase value of the measured impedance into the user input command.

8. The user input device of any preceding claim, wherein the radio frequency resonator is comprised in a wireless communication circuitry supporting a wireless communication protocol.

9. The user input device of any preceding claim, further comprising a mode selector circuitry configured to change, on the basis of the measured electric property, an operational mode of at least one of the radio frequency radiator circuitry, the measurement circuitry, and the processing circuitry between a default mode and an underwater mode.

10. The user input device of any preceding claim, further comprising a wireless communication circuitry configured to measure a received signal strength indicator of a radio signal received from another apparatus, and wherein the processing circuitry is configured to trigger pairing with the other apparatus on the basis of the measured electric property and the measured received signal strength indicator.

11. The user input device of any preceding claim, wherein the apparatus comprises a wrist apparatus attachable to a wrist of a user, and wherein the processing circuitry is configured to determine from the measured electric property whether or not the wrist apparatus is attached to the wrist.

12. The user input device of any preceding claim, wherein the radio frequency resonator is comprised in a strap of the apparatus.

13. The user input device of any preceding claim, wherein the response of the electric property to the proximity of the object is continuous.

## Patentansprüche

1. Benutzereingabegerät umfassend:
eine Hochfrequenz-Strahlerschaltung mit einem langgestreckten Hochfrequenz-Resonator (104, 106, 108, 110), der dafür konfiguriert ist, ein elektromagnetisches Feld zu erzeugen, welches sich von dem Hochfrequenz-Resonator ausbreitet;
eine Messschaltung (300), die dafür konfiguriert ist, eine elektrische Eigenschaft des Hochfrequenz-Resonators zu messen, welche sich als Reaktion auf eine Änderung an einer nahen Position eines Objekts entlang des langgestreckten Hochfrequenz-Resonators ändert, wenn der Hochfrequenz-Resonator das elektromagnetische Feld erzeugt; und
eine Datenbank (304), die eine Vielzahl von Messwerten der elektrischen Eigenschaft des Hochfrequenz-Resonators den jeweiligen Positionsindizes entlang des langgestreckten Hochfrequenz-Resonators zuordnet; und
eine Verarbeitungsschaltung (302), die dafür konfiguriert ist, anhand der gemessenen elektrischen Eigenschaft und der Datenbank eine Position des Objekts entlang des langgestreckten Hochfrequenz-Resonators zu bestimmen und die gemessene elektrische Eigenschaft in einen Benutzereingabebefehl umzuwandeln.

2. Benutzereingabegerät nach Anspruch 1, wobei die gemessene elektrische Eigenschaft mindestens entweder eine Impedanz des Hochfrequenz-Resonators oder eine Resonanzfrequenz des Hochfrequenz-Resonators umfasst.

3. Benutzereingabegerät nach Anspruch 1 oder 2, wobei das Gerät weiter eine Anzeigeeinheit umfasst und wobei sich der Hochfrequenz-Resonator entlang einer Oberfläche der Anzeigeeinheit erstreckt.

4. Benutzereingabegerät nach Anspruch 3, wobei der Hochfrequenz-Resonator ein erster Hochfrequenz-Resonator ist und sich entlang einer ersten Richtung der Oberfläche der Anzeigeeinheit erstreckt, und wobei das Gerät weiter einen zweiten Hochfrequenz-Resonator umfasst.

5. Benutzereingabegerät nach Anspruch 4, wobei sich der zweite Hochfrequenz-Resonator in der ersten Richtung oder in einer Richtung senkrecht zur ersten Richtung erstreckt.

6. Benutzereingabegerät nach einem der vorstehenden Ansprüche, wobei eine Länge des Hochfrequenz-Resonators weniger als die Hälfte einer Wellenlänge eines Hochfrequenz-Eingangssignals an dem Hochfrequenz-Resonator beträgt, wenn dieser das elektromagnetische Feld erzeugt.

7. Benutzereingabegerät nach einem der vorstehenden Ansprüche, wobei die Messschaltung dafür konfiguriert ist, die Impedanz des Hochfrequenz-Resonators zu messen, und wobei die Verarbeitungsschaltung dafür konfiguriert ist, eine Kombination aus einem Amplitudenwert und einem Phasenwert der gemessenen Impedanz in den Benutzereingabebefehl umzuwandeln.

8. Benutzereingabegerät nach einem der vorstehenden Ansprüche, wobei der Hochfrequenz-Resonator in einer drahtlosen Kommunikationsschaltung enthalten ist, die ein drahtloses Kommunikationsprotokoll unterstützt.

9. Benutzereingabegerät nach einem der vorstehenden Ansprüche, das weiter eine Modusauswahlschaltung umfasst, die dafür konfiguriert ist, auf der Grundlage der gemessenen elektrischen Eigenschaft einen Betriebsmodus von mindestens entweder der Hochfrequenz-Strahlerschaltung, der Messschaltung oder der Verarbeitungsschaltung zwischen einem Standardmodus und einem Unterwassermodus zu wechseln.

10. Benutzereingabegerät nach einem der vorstehenden Ansprüche, das weiter eine drahtlose Kommunikationsschaltung umfasst, die dafür konfiguriert ist, einen empfangenen Signalstärkeindikator für ein von einem anderen Gerät empfangenes Funksignal zu messen, und wobei die Verarbeitungsschaltung dafür konfiguriert ist, auf der Grundlage der gemessenen elektrischen Eigenschaft und des gemessenen empfangenen Signalstärkeindikators eine Kopplung mit dem anderen Gerät auszulösen.

11. Benutzereingabegerät nach einem der vorstehenden Ansprüche, wobei das Gerät eine Handgelenkvorrichtung umfasst, die an einem Handgelenk eines Benutzers befestigt werden kann, und wobei die Verarbeitungsschaltung dafür konfiguriert ist, aus der gemessenen elektrischen Eigenschaft zu ermitteln, ob die Handgelenkvorrichtung am Handgelenk befestigt ist oder nicht.

12. Benutzereingabegerät nach einem der vorstehenden Ansprüche, wobei der Hochfrequenz-Resonator in einem Band der Vorrichtung enthalten ist.

13. Benutzereingabegerät nach einem der vorstehenden Ansprüche, wobei die Reaktion der elektrischen Eigenschaft auf die Nähe des Objekts kontinuierlich ist.

## Revendications

1. Dispositif d'entrée utilisateur comprenant :
un circuit d'élément rayonnant radiofréquence comprenant un résonateur radiofréquence allongé (104, 106, 108, 110) configuré pour générer un champ électromagnétique s'étendant à partir du résonateur radiofréquence ;
un circuit de mesure (300) configuré pour mesurer une propriété électrique du résonateur radiofréquence qui change en réponse à un changement dans un emplacement proche d'un objet le long du résonateur radiofréquence allongé lorsque le résonateur radiofréquence est en train de générer le champ électromagnétique ; et
une base de données (304) mappant une pluralité de valeurs de mesure de la propriété électrique du résonateur radiofréquence par rapport à des indices d'emplacement respectifs le long du résonateur radiofréquence allongé ; et
un circuit de traitement (302) configuré pour déterminer, sur la base de la propriété électrique mesurée et de la base de données, un emplacement de l'objet le long du résonateur radiofréquence allongé et pour convertir la propriété électrique mesurée en une instruction d'entrée utilisateur.

2. Dispositif d'entrée utilisateur selon la revendication 1, dans lequel la propriété électrique mesurée comprend au moins une d'une impédance du résonateur radiofréquence et d'une fréquence de résonance du résonateur radiofréquence.

3. Dispositif d'entrée utilisateur selon la revendication 1 ou 2, dans lequel l'appareil comprend en outre une unité d'affichage, et dans lequel le résonateur radiofréquence s'étend le long d'une surface de l'unité d'affichage.

4. Dispositif d'entrée utilisateur selon la revendication 3, dans lequel le résonateur radiofréquence est un premier résonateur radiofréquence et s'étend le long d'une première direction de la surface de l'unité d'affichage, et dans lequel l'appareil comprend en outre un deuxième résonateur radiofréquence.

5. Dispositif d'entrée utilisateur selon la revendication 4, dans lequel le deuxième résonateur radiofréquence s'étend dans la première direction ou dans une direction perpendiculaire à la première direction.

6. Dispositif d'entrée utilisateur selon l'une quelconque des revendications précédentes, dans lequel une longueur du résonateur radiofréquence est inférieure à une moitié d'une longueur d'onde d'un signal radiofréquence entré dans le résonateur radiofréquence lors de la génération du champ électromagnétique.

7. Dispositif d'entrée utilisateur selon l'une quelconque des revendications précédentes, dans lequel le circuit de mesure est configuré pour mesurer l'impédance du résonateur radiofréquence et dans lequel le circuit de traitement est configuré pour convertir une combinaison d'une valeur d'amplitude et d'une valeur de phase de l'impédance mesurée en l'instruction d'entrée utilisateur.

8. Dispositif d'entrée utilisateur selon l'une quelconque des revendications précédentes, dans lequel le résonateur radiofréquence est compris dans un circuit de communication sans fil supportant un protocole de communication sans fil.

9. Dispositif d'entrée utilisateur selon l'une quelconque des revendications précédentes, comprenant en outre un circuit de sélectionneur de mode configuré pour changer, sur la base de la propriété électrique mesurée, un mode opérationnel d'au moins un du circuit d'élément rayonnant radiofréquence, du circuit de mesure, et du circuit de traitement entre un mode par défaut et un mode immergé.

10. Dispositif d'entrée utilisateur selon l'une quelconque des revendications précédentes, comprenant en outre un circuit de communication sans fil configuré pour mesurer un indicateur de puissance de signal reçu d'un signal radio reçu d'un autre appareil, et dans lequel le circuit de traitement est configuré pour déclencher un appariement avec l'autre appareil sur la base de la propriété électrique mesurée et de l'indicateur de puissance de signal reçu mesuré.

11. Dispositif d'entrée utilisateur selon l'une quelconque des revendications précédentes, dans lequel l'appareil comprend un appareil pour poignet pouvant être fixé à un poignet d'un utilisateur, et dans lequel le circuit de traitement est configuré pour déterminer à partir de la propriété électrique mesurée si l'appareil pour poignet est fixé ou non au poignet.

12. Dispositif d'entrée utilisateur selon l'une quelconque des revendications précédentes, dans lequel le résonateur radiofréquence est compris dans un bracelet de l'appareil.

13. Dispositif d'entrée utilisateur selon l'une quelconque des revendications précédentes, dans lequel la réponse de la propriété électrique à la proximité de l'objet est continue.
